# EUROPEAN PATENT APPLICATION

(11) **EP 4 814 054 A1**
(43) Date of publication of application: **30.09.2026**
(21) Application number: 24911376.2
(22) Date of filing: 26.12.2024
(51) Int. Cl.: C08L 23/08, F16L 11/04, B29D 23/00

(54) **EASILY PEELABLE HEAT SHRINK TUBING AND MANUFACTURING METHOD THEREFOR**

(30) Priority: 29.12.2023 CN 202311839346; 29.12.2023 CN 202311839350
(71) Applicant: Shenzhen Woer Heat-shrinkable Material Co., Ltd., Shenzhen, Guangdong 518118 (CN)
(72) Inventor: HUANG, Zhaozheng, Shenzhen, Guangdong 518118 (CN)
(74) Representative: Von Rohr Patentanwälte Partnerschaft mbB
(86) International application number: PCT/CN2024/142899
(87) International publication number: WO 2025/140455

(57) **Abstract**

Easily peelable heat shrink tubing and a manufacturing method therefor. The heat shrink tubing uses an ethylene-acrylate copolymer as a base resin. Because ethylene-acrylate is a copolymer and contains acrylate side groups, crystallization of the ethylene-acrylate copolymer is disrupted, the distance between main-chain ethylene-based molecules is increased, and the entanglement of structures of the molecules are reduced, so that the cohesive strength of ethylene-acrylate molecular chains is decreased. By controlling the orientation degree of internal molecular chains of the ethylene-acrylate copolymer of extruded tubing in an extrusion process, the orientation degree is maintained within the range of 40% to 95%, so that the molecular chains and segments of the ethylene-acrylate copolymer extend in an orientation direction from a freely coiled disordered state, thereby further reducing the entanglement of structures of the molecules. When the easily peelable heat shrink tubing shrinks by more than 35% at 200°C, the orientation degree of the molecular chains of the easily peelable heat shrink tubing ranges from 30% to 85%, so that room-temperature tearability of the easily peelable heat shrink tubing is realized.

## Description

### CROSS-REFERENCE TO THE RELATED APPLICATIONS

The present invention claims priority to Chinese Patent Application No. 202311839350.2, filed with the China National Intellectual Property Administration on December 29, 2023, and entitled "EASILY PEELABLE HEAT SHRINK TUBING AND MANUFACTURING METHOD THEREFOR", the contents of which are incorporated herein by reference in entirety.

The present invention claims priority to Chinese Patent Application No. 202311839346.6, filed with the China National Intellectual Property Administration on December 29, 2023, and entitled "EASILY PEELABLE HEAT SHRINK TUBING", the contents of which are incorporated herein by reference in entirety.

### TECHNICAL FIELD

The present invention relates to the technical field of pipe materials, and in particular, relates to an easy-to-peel heat-shrinkable pipe (i.e., an easily peelable heat shrink tubing) and a preparation method for the same.

### BACKGROUND

Easy-to-peel heat-shrinkable pipes are mainly used for protecting or assisting shrinkage of precision devices, electronic components, medical devices and the like, for example, assisting non-shrinkable polymer pipes in medical devices to shrink onto corresponding mandrels, or acting on medical laser welded products. After completing auxiliary shrinkage, the easy-to-peel heat-shrinkable pipe can be conveniently removed without residue from one end at any angle along the axial direction, without adopting mechanical removal means (such as cutting, scratching, slitting, grinding and other operations that may cause defects or damage to internal materials). One end of the pipe is pre-provided with defects to facilitate peeling. After the easy-to-peel heat-shrinkable pipe is removed, the surface of the non-shrinkable polymer pipe is smooth, defect-free and residue-free.

At present, commercially available room-temperature tearable heat-shrinkable pipes are generally fluororesin (FEP) easy-to-peel heat-shrinkable pipes, while easy-to-peel heat-shrinkable pipes made of polyolefin and copolymers thereof are relatively few in quantity.

### SUMMARY

A main objective of the present invention is to provide an easy-to-peel heat-shrinkable pipe made of polyolefin and copolymer resins thereof. The pipe has low tear strength and is free of adhesion to internal materials, can completely replace FEP easy-to-peel heat-shrinkable pipes, and provides a new alternative for easy-to-peel heat-shrinkable pipes.

In a first aspect, embodiments of the present invention provide an easy-to-peel heat-shrinkable pipe, having linear tearability in a length direction of the pipe, wherein the preparation materials of the easy-to-peel heat-shrinkable pipe include ethylene-acrylate copolymer as a matrix resin; in an extrusion procedure, a molecular chain orientation degree of an extruded pipe is controlled to be 40%-95%; a shrinkage rate of the easy-to-peel heat-shrinkable pipe when heated at 200°C is more than or equal to 35%; and after the easy-to-peel heat-shrinkable pipe shrinks by more than or equal to 35% at 200°C, the molecular chain orientation degree of the easy-to-peel heat-shrinkable pipe is 30%-85%.

In some embodiments of the present invention, in the extrusion procedure, the molecular chain orientation degree of the extruded pipe is controlled to be 50%-90%; the shrinkage rate of the easy-to-peel heat-shrinkable pipe when heated at 200°C is more than or equal to 35%; and after the easy-to-peel heat-shrinkable pipe shrinks by more than or equal to 35% at 200°C, the molecular chain orientation degree of the easy-to-peel heat-shrinkable pipe is 40%-85%.

In some embodiments of the present invention, a radiation procedure is further arranged after the extrusion procedure, and a radiation dose provided by radiation equipment in the radiation procedure is 100 kGy-300 kGy.

In some embodiments of the present invention, the ethylene-acrylate copolymer includes at least one selected from the group consisting of ethylene-methyl acrylate copolymer (EMA), ethylene-ethyl acrylate copolymer (EEA), ethylene-butyl acrylate copolymer (EBA) and ethylene-methyl methacrylate copolymer (EMMA).

In some embodiments of the present invention, a melt index of the ethylene-acrylate copolymer is (0.5-10) g/10min and an acrylic acid content is 9 wt%-30 wt%.

In some embodiments of the present invention, a tear strength of the ethylene-acrylate copolymer is lower than 75 kN/m.

In some embodiments of the present invention, a tensile strength of the ethylene-acrylate copolymer is 15 MPa-24 MPa.

In some embodiments of the present invention, in parts by weight, the preparation materials of the easy-to-peel heat-shrinkable pipe include the following components:
ethylene-acrylate copolymer: 20-90 parts; and
reinforcing agent: 10-80 parts.

In some embodiments of the present invention, the reinforcing agent includes at least one selected from the group consisting of polyethylene, polyolefin elastomer and ethylene-vinyl acetate copolymer.

In some embodiments of the present invention, the polyethylene (PE) is low-density polyethylene (LDPE), and the low-density polyethylene (LDPE) has a melt index of (0.3-7) g/10min and a tensile strength of 17 MPa-30 MPa.

In some embodiments of the present invention, the polyethylene (PE) is linear low-density polyethylene (LLDPE), and the linear low-density polyethylene (LLDPE) has a melt index of (0.3-10) g/10min and a tensile strength of 20 MPa-35 MPa.

In some embodiments of the present invention, the polyethylene (PE) is medium-density polyethylene (MDPE), and the medium-density polyethylene (MDPE) has a melt index of (0.3-10) g/10min and a tensile strength of 25 MPa-35 MPa.

In some embodiments of the present invention, the polyethylene (PE) is high-density polyethylene (HDPE), and the high-density polyethylene (HDPE) has a melt index of (0.3-10) g/10min and a tensile strength of 28 MPa-40 MPa.

In some embodiments of the present invention, the polyolefin elastomer (POE) has a melt index of (0.5-5) g/10min, a tensile strength of 18 MPa-40 MPa and a melting temperature of 70°C -110°C.

In some embodiments of the present invention, the ethylene-vinyl acetate copolymer (EVA) has a melt index of (0.5-7) g/10min, a tensile strength of 16 MPa-25 MPa, and a vinyl acetate (VA) content thereof is not more than 20%.

In some embodiments of the present invention, in parts by weight, the preparation materials of the easy-to-peel heat-shrinkable pipe further include at least one auxiliary agent selected from:
antioxidant: 0.05-0.3 parts; and
lubricant: 0.05-0.1 parts,
wherein the antioxidant includes, but is not limited to, asymmetric hindered phenolic antioxidants, aromatic amine antioxidants, thioether antioxidants and phosphite antioxidants; and
the lubricant includes, but is not limited to, PTFE powder, zinc stearate, magnesium stearate, silicone, calcium stearate and ethylene bis-stearamide.

In some embodiments of the present invention, a ratio representing the tear linearity ranges from 50%:50% to 48%:52%.

In some embodiments of the present invention, an inner diameter of the easy-to-peel heat-shrinkable pipe is 0.3 mm-16 mm.

In some embodiments of the present invention, a wall thickness of the easy-to-peel heat-shrinkable pipe is 0.1 mm-2 mm.

In a second respect, embodiments of the present invention provide an easy-to-peel heat-shrinkable pipe, having linear tearability in a length direction of the pipe, wherein the preparation materials of the easy-to-peel heat-shrinkable pipe include ethylene-acrylate copolymer as a matrix resin; a shrinkage rate of the easy-to-peel heat-shrinkable pipe when heated at 200°C is more than or equal to 35%; and after the easy-to-peel heat-shrinkable pipe shrinks by more than or equal to 35% at 200°C, the molecular chain orientation degree of the easy-to-peel heat-shrinkable pipe is 30%-85%.

In some embodiments of the present invention, the shrinkage rate of the easy-to-peel heat-shrinkable pipe when heated at 200°C is more than or equal to 35%; and after the easy-to-peel heat-shrinkable pipe shrinks by more than or equal to 35% at 200°C, the molecular chain orientation degree of the easy-to-peel heat-shrinkable pipe is 35%-85%.

In some embodiments of the present invention, the shrinkage rate of the easy-to-peel heat-shrinkable pipe when heated at 200°C is more than or equal to 35%; and after the easy-to-peel heat-shrinkable pipe shrinks by more than or equal to 35% at 200°C, the molecular chain orientation degree of the easy-to-peel heat-shrinkable pipe is 40%-85%.

In a third aspect, embodiments of the present invention provide a preparation method for an easy-to-peel heat-shrinkable pipe, including the following steps:
masterbatch processing, wherein raw materials are uniformly mixed, and subjected to extrusion by extrusion equipment, drawing and pelletizing to obtain masterbatch particles, wherein the raw materials include ethylene-acrylate copolymer;
extrusion into pipe, wherein the obtained masterbatch particles are extruded into a pipe by an extruder to obtain a semi-finished pipe, wherein the molecular chain orientation degree of the extruded pipe is controlled to be 40%-95%;
radiation procedure, wherein the semi-finished pipe is irradiated by radiation equipment, and a radiation dose is controlled to be 100 kGy-300 kGy to obtain an irradiated pipe; and
expansion and shaping, wherein the irradiated pipe is expanded at 130°C-260°C, and then cooled and shaped to obtain the easy-to-peel heat-shrinkable pipe, wherein after the easy-to-peel heat-shrinkable pipe shrinks by more than or equal to 35% at 200°C, the molecular chain orientation degree thereof is 30%-85%.

In some embodiments of the present invention, in the step of masterbatch processing, the raw materials further include at least one selected from the group consisting of a reinforcing agent, an antioxidant and a lubricant.

In some embodiments of the present invention, in the step of masterbatch processing, a mixing duration is 3 min-5 min.

In some embodiments of the present invention, in the step of masterbatch processing, an extrusion temperature of the extrusion equipment is 130°C-200°C.

In some embodiments of the present invention, in the step of extrusion into pipe, the molecular chain orientation degree of the extruded pipe is 50%-90%.

In some embodiments of the present invention, after the easy-to-peel heat-shrinkable pipe shrinks by more than or equal to 35% at 200°C, the molecular chain orientation degree thereof is 40%-85%.

In some embodiments of the present invention, the extrusion temperature of the extruder in the step of extrusion into pipe is 130°C-190°C.

In some embodiments of the present invention, in the step of extrusion into pipe, a draw ratio of the extruded pipe is 7-60.

In some embodiments of the present invention, in the step of extrusion into pipe, the draw ratio of the extruded pipe is 8.5-30.

### Beneficial Effects of the Present invention

The easy-to-peel heat-shrinkable pipe provided by the present invention adopts ethylene-acrylate copolymer as the matrix resin, and since ethylene-acrylate is a copolymer and contains an acrylate side group, the crystallization thereof is disorganized, the distance between vinyl molecules on the main chain is increased, and the molecular entanglement structure is reduced, so that the cohesive strength of molecular chains of the ethylene-acrylate copolymer is decreased. Further, the orientation degree of molecular chains in the ethylene-acrylate copolymer of the extruded pipe is controlled within a range of 40%-95% in the extrusion procedure, so that molecular chains and chain segments of the ethylene-acrylate copolymer stretch from a freely coiled disordered state toward the orientation direction, and the molecular entanglement structure is further reduced. Moreover, after the easy-to-peel heat-shrinkable pipe shrinks by more than or equal to 35% at 200°C, the molecular chain orientation degree of the easy-to-peel heat-shrinkable pipe is 30%-85%, so that room-temperature tearable performance of the easy-to-peel heat-shrinkable pipe is achieved.

### DETAILED DESCRIPTION OF THE EMBODIMENTS

It should be understood that the specific embodiments described herein are only used for explaining the present invention, but not intended to limit the present invention.

The technical solutions in the embodiments of the present invention will be described clearly and completely below with reference to the drawings. Apparently, the described embodiments are merely part of the embodiments of the present invention, rather than all embodiments. Based on the embodiments of the present invention, all other embodiments obtained by a person of ordinary skill in the art without creative work shall fall within the protection scope of the present invention.

In the present invention, descriptions such as "first", "second" etc., are used solely for descriptive purposes and should not be interpreted as indicating or implying relative importance or implicitly specifying the number of technical features. Therefore, features designated as "first" or "second" may explicitly or implicitly include at least one instance of that feature. Furthermore, technical solutions from different embodiments may be combined with each other, provided that such combinations can be implemented by a person skilled in the art. If combining technical solutions leads to contradictions or is unachievable, such combinations of technical solutions shall be deemed non-existent and not within the scope of protection claimed in the present invention.

A polymer orientation structure refers to a structure in which molecular chains or other structural units are preferentially arranged along the acting direction of an external force and solidified under the action of the external force. After melt-extruded ethylene-acrylate copolymer is subjected to extrusion stretching treatment, molecular chains of the ethylene-acrylate copolymer are arranged along the stretching direction, that is, preferentially oriented along the stretching direction.

Ethylene-acrylate copolymer is formed by copolymerization of ethylene and acrylate, and mainly includes ethylene-methyl acrylate copolymer (EMA), ethylene-ethyl acrylate copolymer (EEA), ethylene-butyl acrylate copolymer (EBA) and ethylene-methyl methacrylate copolymer (EMMA). Properties of ethylene-acrylate copolymer are related to the content, average molecular weight, molecular weight distribution and long and short branched chains of acrylate monomers.

A polymer material exists in a state in which molecular chains of the molecules constituting the polymer material are entangled in a state of ball of yarn. In a molded body formed by using the polymer material, the entanglement state of molecules is also maintained, and the physical properties of the molded body significantly affect the molecular entanglement structure. In the research process of peelable pipes, it is unexpectedly found that an easy-to-peel pipe with linear tearability in the length direction of the pipe can be prepared by taking ethylene-acrylate copolymer as a matrix resin and controlling the molecular chain orientation degree of the extruded pipe within a certain range in the extrusion procedure. This is probably due to the special structural characteristics of ethylene-acrylate copolymers. The ethylene-acrylate copolymer contains side groups such as methyl acrylate, ethyl acrylate, butyl acrylate and methyl methacrylate, which affects molecular crystallization and molecular entanglement, increases the distance between main chain molecules, reduces the molecular entanglement structure, and lowers the cohesive strength of molecular chains of the ethylene-acrylate copolymer. The orientation degree of molecular chains inside the ethylene-acrylate copolymer is further controlled in the extrusion procedure to ensure the orientation degree within a certain range, so that molecular chains and chain segments of the ethylene-acrylate copolymer stretch from a freely coiled disordered state toward the orientation direction, the molecular entanglement structure is further reduced, and the tearability of the pipe is realized. The ordered state change of orientation significantly improves the strength of the copolymer along the length direction of the pipe, while the strength in the direction perpendicular to the pipe is reduced, which further improves the strength and tearability of the pipe. The tearable pipe is prepared into a heat-shrinkable pipe through radiation and expansion procedures, and the prepared heat-shrinkable pipe retains the same tearability as that before pipe expansion.

In the present invention, ethylene-acrylate copolymer is adopted as the matrix resin, and the orientation degree of the molecular chains inside the ethylene-acrylate copolymer is controlled within the range of 40%-95% in the extrusion procedure. Further, the easy-to-peel pipe after extrusion is subjected to radiation crosslinking in the radiation procedure, so that an ordinary two-dimensional linear molecular structure is transformed into a three-dimensional network molecular structure. The three-dimensional network molecular structure not only solidifies the orientation of molecular chains of the extruded pipe formed in the extrusion procedure, but also facilitates the subsequent expansion procedure. However, under an expansion temperature of 130°C-260°C, oriented three-dimensional network molecules shrink and thus change the orientation degree thereof. By controlling a proper radiation dose to control the crosslinking degree of ethylene-acrylate copolymer in the radiation process, the molecular chain orientation degree of the easy-to-peel heat-shrinkable pipe is finally controlled to be 30%-85% after shrinking by more than or equal to 35% at 200°C, so that the pipe has room-temperature tearable performance.

In some embodiments, the molecular chain orientation degree of the extruded pipe is controlled to be 50%-90% in the extrusion procedure. After the easy-to-peel heat-shrinkable pipe shrinks by more than or equal to 35% upon heating at 200°C, the molecular chain orientation degree thereof is 40%-85%. The orientation degrees within the above two ranges enable the prepared easy-to-peel heat-shrinkable pipe to have superior linear tear performance.

In some embodiments, a radiation procedure is further arranged after the extrusion procedure, and a radiation dose provided by radiation equipment in the radiation procedure is 100 kGy-300 kGy. The orientation degree of the easy-to-peel heat-shrinkable pipe depends not only on the extrusion procedure but also on the radiation procedure. In the extrusion procedure, the draw ratio is controlled by adjusting the speed difference between the extrusion speed of pipe blank extruded from a die and the traction speed of a tractor for drawing the pipe. The draw ratio of the extruded pipe is controlled to be 7-60, preferably 8.5-30, so as to obtain an extruded pipe with a molecular chain orientation degree of 40%-95%, i.e., an easy-to-peel pipe. After the extruded pipe is treated by the radiation procedure with a controlled radiation dose of 100 kGy-300 kGy, the ordinary two-dimensional linear molecular structure is transformed into a three-dimensional network molecular structure with a proper crosslinking degree. Finally, after the easy-to-peel heat-shrinkable pipe shrinks by more than or equal to 35% at 200°C, the molecular chain orientation degree thereof is 30%-85%, and the pipe has room-temperature tearable performance. Certainly, the tearable performance of the easy-to-peel heat-shrinkable pipe can also be realized by adding a crosslinking agent into the ethylene-acrylate copolymer and adjusting the radiation dose in the radiation procedure. The radiation equipment may be an electron accelerator radiation device, a radioactive isotope radiation device and the like, which is not limited herein.

When the content of acrylate monomers in the ethylene-acrylate copolymer increases, the orderliness of molecular chains thereof is further reduced, and the content of acrylate side groups is increased accordingly, so that the crystallinity and melting point are lowered, and the tearability becomes better. However, excessively high content of acrylate monomers will lead to excessively low cohesive strength, resulting in problems such as reduced overall pipe strength and affecting pipe forming and use. Therefore, the acrylic acid content is preferably 9 wt%-30 wt%.

Melt index (MI) is an index representing the fluidity of resin. The melt index refers to the mass in grams of resin melt passing through a standard capillary within 10 minutes under certain temperature and pressure, with the unit of g/10min. A higher melt index corresponds to smaller average molecular weight, lower viscosity, better fluidity and easier processing and forming of resin, but poorer mechanical properties; a lower melt index corresponds to larger average molecular weight, higher viscosity, poorer fluidity and higher difficulty in forming and processing of resin, but better mechanical properties. In some embodiments, the melt index (MI) of the ethylene-acrylate copolymer is (0.5-6) g/10min, and the melt index within this range can satisfy both good fluidity and good mechanical properties.

In some embodiments, the tear strength of the ethylene-acrylate copolymer is lower than 75 kN/m, and the tear strength within this range facilitates better peeling off of the heat-shrinkable pipe.

In some embodiments, the tensile strength of the ethylene-acrylate copolymer is 15 MPa-24 MPa, and the tensile strength within this range can improve the tensile strength of the heat-shrinkable pipe.

To further improve the tensile strength of the easy-to-peel heat-shrinkable pipe, polymers such as polyethylene (PE), polyolefin elastomer (POE) and ethylene-vinyl acetate copolymer (EVA) can be added as reinforcing agents. Polyethylene is a thermoplastic plastic formed by polymerization of ethylene. Polyethylene with different densities obtained by different polymerization methods is divided into high-density polyethylene (HDPE), medium-density polyethylene (MDPE), linear low-density polyethylene (LLDPE) and low-density polyethylene (LDPE). The polyolefin elastomer (POE) may be one of random copolymer elastomers of ethylene and 1-butene, ethylene and 1-hexene, ethylene and 1-octene; and when ethylene-vinyl acetate copolymer (EVA) is selected, a vinyl acetate (VA) content lower than 20% achieves a better reinforcing effect. In some embodiments, in parts by weight, the preparation materials of the easy-to-peel heat-shrinkable pipe include the following components:
ethylene-acrylate copolymer: 20-90 parts; and
reinforcing agent: 10-80 parts.

The addition of the reinforcing agent can increase the tensile strength of the molecular structure, and the orientation degree of the molecular chain inside the blend of ethylene-acrylate copolymer and reinforcing agent is further controlled by means of an extrusion process, ensuring that the orientation degree is in a range of 40%-95%, such that the molecular chain and the chain segment of the blend of ethylene-acrylate copolymer and reinforcing agent stretch in the orientation direction from the disordered state of free curling, reducing the linear entanglement structure of the blend molecules. The reinforcing agent has a characteristic of high crystallinity or long branched chains; and a reinforcing agent with high crystallinity, such as PE or EVA, causes the crystallization of the reinforcing agent to change from spherulites to monoclinic crystals during pipe orientation by extrusion stretching. The formation of monoclinic crystals can not only increase the tensile strength in the orientation direction, but also increase the number of physical crosslinking points formed by the blend molecular chain and chain segment in the orientation direction (that is, along the length direction of the pipe), thereby significantly increasing the tensile strength of the pipe in the orientation direction. A reinforcing agent containing long branched chains, such as POE or LDPE, can form certain physical crosslinking points with the crystalline region of the ethylene-acrylate copolymer, and during orientation by extrusion stretching, the ethylene-acrylate copolymer changes from spherulites to monoclinic crystals by stretching orientation, and forms physical crosslinking points with the oriented long branched chain molecules, increasing the strength in the orientation direction, while the physical crosslinking points in a direction perpendicular to the orientation direction are significantly reduced, resulting in a decrease in the strength in a direction perpendicular to the orientation direction. By adding an appropriate proportion of reinforcing agent and controlling the orientation degree in the extrusion stretching process, such that the reinforcing agent exhibits fiber-like reinforcing units along the orientation direction when the ethylene-acrylate copolymer is oriented, thereby further improving the tearability of the pipe. Therefore, the addition of the reinforcing agent can not only increase the tensile strength of the pipe in the orientation direction, but also further improve the tearability thereof along the length direction of the pipe. Furthermore, the pipe is subjected to radiation crosslinking in the radiation procedure, so that the ordinary two-dimensional linear molecular structure is transformed into a three-dimensional network molecular structure. The three-dimensional network molecular structure not only solidifies the orientation of molecular chains of the extruded pipe formed in the extrusion procedure, but also facilitates the subsequent expansion procedure. However, under an expansion temperature of 130°C-260°C, oriented three-dimensional network molecules shrink and thus change the orientation degree thereof. By controlling a proper radiation dose to control the crosslinking degree of blend molecules in the radiation process, the molecular chain orientation degree of the easy-to-peel heat-shrinkable pipe is finally controlled to be 30%-85% after shrinking by more than or equal to 35% at 200°C, so that the pipe has room-temperature tearable performance.

In some embodiments, the polyethylene (PE) is low-density polyethylene (LDPE), the low-density polyethylene (LDPE) has a melt index of (0.3-7) g/10min and a tensile strength of 17 MPa-30 MPa.

In some embodiments, the polyethylene (PE) is linear low-density polyethylene (LLDPE), the linear low-density polyethylene (LLDPE) has a melt index of (0.3-10) g/10min and a tensile strength of 20 MPa-35 MPa.

In some embodiments, the polyethylene (PE) is medium-density polyethylene (MDPE), the medium-density polyethylene (MDPE) has a melt index of (0.3-10) g/10min and a tensile strength of 25 MPa-35 MPa.

In some embodiments, the polyethylene (PE) is high-density polyethylene (HDPE), the high-density polyethylene (HDPE) has a melt index of (0.3-10) g/10min and a tensile strength of 28 MPa-40 MPa.

In some embodiments, the melt index of the polyolefin elastomer (POE) is (0.5-5) g/10min, the tensile strength thereof is 18 MPa-40 MPa, and the melting temperature thereof is 70°C-110°C.

In some embodiments, the melt index of the ethylene-vinyl acetate copolymer (EVA) is (0.5-7) g/10min, the tensile strength thereof is 16 MPa-25 MPa, and the vinyl acetate (VA) content is not more than 20%.

Certainly, to obtain a pipe with higher performance, auxiliary agents such as antioxidants and lubricants can also be added. In some embodiments, the preparation materials of the easy-to-peel heat-shrinkable pipe further include at least one of the following auxiliary agents: 0.05-0.3 parts of antioxidant; and 0.05-0.1 parts of lubricant.

Antioxidants are beneficial to improving the oxidation resistance and aging resistance of the easy-to-peel heat-shrinkable pipe and prolonging the service life of the easy-to-peel pipe. The antioxidant includes but is not limited to asymmetric hindered phenolic antioxidants, aromatic amine antioxidants, thioether antioxidants and phosphite antioxidants.

Among them, the hindered phenolic antioxidants include, but are not limited to, antioxidant 1010 (tetrakis[β-(3,5-di-tert-butyl-4-hydroxyphenyl) propionic acid] pentaerythritol ester), BHT (2,6-di-tert-butyl-p-cresol), and antioxidant 1076 (β-(3,5-di-tert-butyl-4-hydroxyphenyl) propionic acid n-octadecanol ester).

Among them, aromatic amine antioxidants include, but are not limited to, diphenylamine, p-phenylenediamine, and dihydroquinoline and derivatives or polymers thereof, such as antioxidant 445 (4,4'-bis(α,α-dimethylbenzyl) diphenylamine).

Among them, thioether antioxidants include, but are not limited to, DLTP (dilauryl thiodipropionate), DSTDP (distearyl thiodipropionate), and DSTP (octadecyl thiodipropionate).

Among them, phosphite antioxidants include, but are not limited to, antioxidant 168 (tris[2,4-di-tert-butylphenyl] phosphite), antioxidant 618 (distearyl pentaerythritol diphosphite), and antioxidant 626 (bis[2,4-di-tert-butylphenyl] pentaerythritol diphosphite).

Lubricants facilitate more uniform mixing of various raw materials, and include but are not limited to PTFE powder, zinc stearate, magnesium stearate, silicone, calcium stearate or ethylene bis-stearamide.

In some embodiments, in parts by weight, the easy-to-peel heat-shrinkable pipe includes the following components:
20-90 parts of ethylene-acrylate copolymer and 10-80 parts of reinforcing agent. For example, the ethylene-acrylate copolymer may be in any value within 20-90 parts such as 20 parts, 30 parts, 40 parts, 50 parts, 60 parts, 70 parts, 80 parts and 90 parts; the reinforcing agent may be in any value within 10-80 parts such as 10 parts, 20 parts, 30 parts, 40 parts, 50 parts, 60 parts, 70 parts and 80 parts.

The limitation of the above parts by weight is conducive to promoting mixing of various raw materials, and satisfies both linear tear performance and certain strength.

In some embodiments, a ratio representing the tear linearity ranges from 50%:50% to 48%:52%, and the closer the ratio is to 50%:50%, the better the tear linearity.

In some embodiments, the inner diameter of the easy-to-peel heat-shrinkable pipe is 0.3 mm-16 mm.

In some embodiments, the wall thickness of the easy-to-peel heat-shrinkable pipe is 0.1 mm-2 mm.

The present invention further provides a method for preparing an easy-to-peel heat-shrinkable pipe, including the following steps:
masterbatch processing, wherein raw materials are uniformly mixed, and subjected to extrusion by extrusion equipment, drawing and pelletizing to obtain masterbatch particles, wherein the raw materials include ethylene-acrylate copolymer;
extrusion into pipe, wherein the obtained masterbatch particles are extruded into a pipe by an extruder to obtain a semi-finished pipe, wherein the molecular chain orientation degree of the extruded pipe is controlled to be 40%-95%;
radiation procedure, wherein the semi-finished pipe is irradiated by radiation equipment with a controlled radiation dose of 100 kGy-300 kGy to obtain an irradiated pipe; and
expansion and shaping, wherein the irradiated pipe is expanded at 130°C-260°C, and then cooled and shaped to obtain the easy-to-peel heat-shrinkable pipe, wherein after the easy-to-peel heat-shrinkable pipe shrinks by more than or equal to 35% at 200°C, the molecular chain orientation degree thereof is 30%-85%.

In some embodiments, in the masterbatch processing step, the raw materials further include at least one selected from the group consisting of a reinforcing agent, an antioxidant and a lubricant.

In some embodiments, the mixing duration in the masterbatch processing step is 3 min-5 min.

In some embodiments, the extrusion temperature of the extrusion equipment in the masterbatch processing step is 130°C-200°C.

In some embodiments, in the extrusion into pipe step, the molecular chain orientation degree of the extruded pipe is 50%-90%.

In some embodiments, in the expansion and shaping step, cooling and shaping are performed to obtain the easy-to-peel heat-shrinkable pipe, and after the easy-to-peel heat-shrinkable pipe shrinks by more than or equal to 35% at 200°C, the molecular chain orientation degree thereof is 35%-85%.

In some embodiments, in the expansion and shaping step, cooling and shaping are performed to obtain the easy-to-peel heat-shrinkable pipe, and after the easy-to-peel heat-shrinkable pipe shrinks by more than or equal to 35% at 200°C, the molecular chain orientation degree thereof is 40%-85%.

In some embodiments, the molecular chain orientation degree of the extruded pipe is controlled to be 40%-95% in the extrusion procedure. After the easy-to-peel heat-shrinkable pipe shrinks by more than or equal to 35% upon heating at 200°C, the molecular chain orientation degree thereof is 35%-85%. The orientation degrees within the above two ranges enable the prepared easy-to-peel heat-shrinkable pipe to have superior linear tear performance.

In some embodiments, the molecular chain orientation degree of the extruded pipe is controlled to be 50%-90% in the extrusion procedure. After the easy-to-peel heat-shrinkable pipe shrinks by more than or equal to 35% upon heating at 200°C, the molecular chain orientation degree thereof is 40%-85%. The orientation degrees within the above two ranges enable the prepared easy-to-peel heat-shrinkable pipe to have superior linear tear performance.

The orientation degree of the easy-to-peel heat-shrinkable pipe depends not only on the extrusion procedure but also on the radiation procedure. In the extrusion procedure, the draw ratio of the extruded pipe is controlled to be 7-60, preferably 8.5-30, so as to obtain an extruded pipe with a molecular chain orientation degree of 40%-95%. After the extruded pipe is treated by the radiation procedure with a controlled radiation dose of 100 kGy-300 kGy, the ordinary two-dimensional linear molecular structure is transformed into a three-dimensional network molecular structure with a proper crosslinking degree. Finally, after the easy-to-peel heat-shrinkable pipe shrinks by more than or equal to 35% at 200°C, the molecular chain orientation degree thereof is 30%-85%, and the pipe has room-temperature tearable performance. Certainly, the tearable performance of the easy-to-peel heat-shrinkable pipe can also be realized by adding a crosslinking agent into a mixture of ethylene-acrylate copolymer and reinforcing agent and adjusting the radiation dose in the radiation procedure. The radiation equipment may be an electron accelerator radiation device, a radioactive isotope radiation device and the like, which is not limited herein.

The easy-to-peel heat-shrinkable pipe of the present invention has thermal shrinkage performance and tear performance, so that it can be closely attached to an adherend and generate a tightening force on the adherend. The magnitude of the tightening force is related to the shrinkage rate of the heat-shrinkable pipe; the higher the shrinkage rate, the greater the tightening force, and the lower the shrinkage rate, the smaller the tightening force. Due to the radiation cross-linkability of ethylene-acrylate copolymer, the crosslinking degree of the extruded pipe can be controlled through the radiation procedure, so that the ordinary two-dimensional linear molecular structure is transformed into a three-dimensional network molecular structure. The three-dimensional network molecular structure fixes the orientation of internal molecular chains of ethylene-acrylate copolymer formed in the extrusion procedure. Further, the crosslinking degree of the blend in the radiation process is controlled by adjusting the radiation dose, so that after the prepared easy-to-peel heat-shrinkable pipe shrinks by more than or equal to 35% at 200°C, the molecular chain orientation degree thereof reaches 30%-85%, thereby realizing the tearable performance of the heat-shrinkable pipe. FEP materials are not radiation-resistant, and long linear macromolecules between FEP materials cannot form a network structure by means of radiation, which causes the difference in shrinkage rate between the two. Controlling the molecular chain orientation degree of the extruded pipe to be 40%-95% in the extrusion procedure, preparing the heat-shrinkable pipe through the radiation procedure and controlling the final orientation degree of the heat-shrinkable pipe are the differences in adjusting tear performance between the two. In addition, the glass transition temperature (Tg) and melting point of ethylene-acrylate copolymer are lower than those of fluororesin substrates, which also makes the application shrinkage temperature of the easy-to-peel heat-shrinkable pipe made of ethylene-acrylate copolymer lower than that of fluororesin-based pipes.

In some embodiments, the minimum shrinkage temperature of the easy-to-peel heat-shrinkable pipe can reach 70°C, and complete shrinkage can be realized at 110°C, which achieves a low shrinkage temperature.

In some embodiments, the shrinkage ratio of the easy-to-peel heat-shrinkable pipe at 110°C is 1.3-4.5.

It can be seen that the easy-to-peel heat-shrinkable pipe provided by the present invention has low shrinkage temperature and high shrinkage rate, and is suitable for assisting shrinkage of large-magnification non-shrinkable polymer pipes. In addition, the addition of the reinforcing agent can also improve the tensile strength of the easy-to-peel heat-shrinkable pipe.

The technical solutions of the present invention are described in further detail below in combination with specific embodiments. It should be understood that the following specific embodiments are only used for explaining the present invention, but not intended to limit the present invention.

### Determination of Draw Ratio

A single-screw extruder is used, and the extrusion die specifications are as follows: the die is D₁ (mm), and the core rod is D₂ (mm), and the extruded pipe dimensions are as follows: extruded pipes of inner diameter of d₁ (mm), and wall thickness of w (mm) (depending on the dimensions of the extruded pipe, a corresponding extruder, die, and core rod must be selected). During the extrusion process, by controlling the traction speed and the extrusion speed, extruded pipes having different draw ratios are obtained, and the draw ratio is calculated as follows: $Draw ratio = \frac{D {1}^{2} - D {2}^{2}}{4 \left({d}_{1}w+{w}^{2}\right)} .$

### Determination of Orientation Degree

Testing is performed by means of synchrotron wide-angle X-ray diffraction (Synchrotron WAXD) (Shanghai Synchrotron Radiation Facility SSRF), with beamline station of BL14B1, electron beam energy of 10 keV, and fixed distance between sample and detector of 280 mm. Two-dimensional images are acquired using a MarCCD detector, the exposure duration is 120 s, and the oriented amorphous-region fraction (A2) and the oriented crystalline-region fraction (A3) are obtained. The orientation degree X of the product is the sum of the oriented crystalline-region fraction and the oriented amorphous-region fraction (that is, X=A2+A3). The specific calculation formula is as follows: $A 2 = \frac{{\sum }_{A 2} 2 π \int sinΦdΦ \int I \left(S\right) {S}^{2} dS}{{\sum }_{total} 2 π \int sinΦdΦ \int I \left(S\right) {S}^{2} dS}$ $A 3 = \frac{{\sum }_{A 3} 2 π \int sinΦdΦ \int I \left(S\right) {S}^{2} dS}{{\sum }_{total} 2 π \int sinΦdΦ \int I \left(S\right) {S}^{2} dS}$
wherein I(S) represents the intensity distribution of the diffraction peak, which can be read from the figure; S is the reciprocal vector in reciprocal space (S=2sinθ/λ), and the unit thereof is nm⁻¹; λ is the wavelength, and 2θ is the scattering angle; and Φ is the angle between the scattering vector and the stretching direction (that is, the azimuthal angle).

### Test for Tear Linearity

In order to more clearly determine the tear linearity, the determination is performed by the following method. A cut having a length of 40 mm is provided at an end portion on one side of a sample having a length of 300 mm. The cut is provided parallel to the length direction of the pipe at the center of the pipe by using a jig. The pipe is torn from the cut portion to the other end portion of the pipe at a speed of 200 mm/min. The weights of the two torn pipes are measured respectively, and a weight ratio is obtained. It can be determined that the closer the ratio is to 50%:50%, the higher the tear linearity.

### Tear Strength Test

After a 40 mm cut is formed by cutting with a knife, a sample of 200 mm is taken, and tearing is performed by means of a tensile testing machine at a speed of 200 mm/min, and the maximum force at that time is measured as the tear strength. Three measurements are performed on samples of the same composition, and a weighted average value thereof is calculated.

### Tensile Strength Test

Testing is performed with reference to the method of UL 224-2021, 5.4.

### Determination of Complete Shrinkage Temperature

A 100 mm sample is taken and heated in a programmed temperature rise oven, with an initial shrinkage temperature set at 50°C. The oven temperature is increased by 10°C every 3 min, and the sample is kept to shrink for 3 min at each temperature. The shrinkage temperature is recorded until the inner diameter after shrinkage no longer changes in three consecutive measurements. The first recorded temperature among the three consecutive measurements is defined as the complete shrinkage temperature.

### Determination of Shrinkage Rate

A 100 mm sample is taken and shrunk for 3 min at 200°C. The inner diameters of the sample before and after shrinkage are measured. The shrinkage rate is calculated according to the following formula: Shrinkage Rate = (Inner Diameter before Shrinkage - Inner Diameter after Shrinkage) / Inner Diameter before Shrinkage × 100%.

### Example 1-1

### Masterbatch processing

Ethylene-methyl acrylate copolymer (EMA, DuPont ELVALOY^{TM} AC 1218) and antioxidant (antioxidant 1010) were added into a high-speed mixer at a mass ratio of 60/0.1, followed by stirring for 3 to 5 minutes. The material obtained in the above process was fed into a twin-screw extruder with a diameter of 30 mm, and extrusion was performed at a screw speed of 45 rpm and a temperature of 130°C-200°C (the temperature range included 10 zones: Zone 1 at 130°C, Zone 2 at 160°C, Zone 3 at 180°C, Zone 4 at 185°C, Zone 5 at 190°C, Zone 6 at 190°C, Zone 7 at 195°C, Zone 8 at 195°C, Zone 9 at 195°C, Zone 10 at 195°C, with the head temperature set at 200°C). Drawing, water cooling and pelletizing were then carried out to finally form masterbatch particles.

### Extrusion into Pipe

The masterbatch particles obtained above were subjected to pipe forming by means of a single-screw extruder. A full-thread screw was adopted, and extrusion forming was conducted at an extrusion temperature of 130°C-190°C (the extrusion temperatures were specifically set as follows: Zone 1 at 130°C, Zone 2 at 180°C, Zone 3 at 190°C, flange zone at 190°C, head zone at 190°C, and mold zone at 190°C). The draw ratio was controlled at 9.7. The molecular chain orientation degree of the extruded pipe was measured to be 50%. A semi-finished pipe with an inner diameter of 0.5 mm, an outer diameter of 0.9 mm and a wall thickness of 0.2 mm was obtained.

### Radiation Crosslinking

The above semi-finished pipe was irradiated by an electron accelerator apparatus at a radiation dose of 200 kGy to complete radiation crosslinking thereof.

### Pipe Expansion

The pipe after radiation crosslinking was expanded to twice its original diameter by an expansion apparatus at 130°C-260°C, followed by cooling and shaping, so as to obtain a heat-shrinkable pipe with an inner diameter of 1.0 mm, an outer diameter of 1.3 mm and a wall thickness of 0.15 mm.

The heat-shrinkable pipe was tested, and the results were as follows: the complete shrinkage temperature was 110°C, the shrinkage rate was 50%, and the molecular chain orientation degree after complete shrinkage was 45%.

### Example 1-2

### Masterbatch processing

Manufacturing was performed in the same manner as that of Example 1-1, except that ethylene-methyl acrylate copolymer (EMA, DuPont ELVALOY^{TM} AC 1218) was replaced with ethylene-ethyl acrylate copolymer (EEA, ELVALOY^{TM} AC 2116).

### Extrusion into Pipe

Semi-forming was carried out in the same manner as that of Example 1-1, except that the draw ratio was controlled at 9.8.

### Radiation Crosslinking

Irradiation was performed in the same manner as that of Example 1-1.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 44%.

### Example 1-3

### Masterbatch processing

Manufacturing was performed in the same manner as that of Example 1-1, except that ethylene-methyl acrylate copolymer (EMA, DuPont ELVALOY^{TM} AC 1218) was replaced with ethylene-butyl acrylate copolymer (EBA, AC 3717).

### Extrusion into Pipe

Semi-forming was carried out in the same manner as that of Example 1-1.

### Radiation Crosslinking

Irradiation was performed in the same manner as that of Example 1-1.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 46%.

### Example 1-4

### Masterbatch processing

Manufacturing was performed in the same manner as that of Example 1-1, except that ethylene-methyl acrylate copolymer (EMA, DuPont ELVALOY^{TM} AC 1218) was replaced with ethylene-methyl methacrylate copolymer (EMMA, Sumitomo CM8014).

### Extrusion into Pipe

Semi-forming was carried out in the same manner as that of Example 1-1, except that the draw ratio was controlled at 9.9.

### Radiation Crosslinking

Irradiation was performed in the same manner as that of Example 1-1.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 45%.

### Example 1-5

### Masterbatch processing

Manufacturing was performed in the same manner as that of Example 1-1.

### Extrusion into Pipe

Semi-forming was carried out in the same manner as that of Example 1-1, except that the draw ratio was controlled at 8.5 and the molecular chain orientation degree of the pipe extruded in the extrusion process was measured to be 40%.

### Radiation Crosslinking

Irradiation was performed in the same manner as that of Example 1-1, except that the radiation dose was controlled at 180 kGy.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 35%.

### Example 1-6

### Masterbatch processing

Manufacturing was performed in the same manner as that of Example 1-1.

### Extrusion into Pipe

Semi-forming was carried out in the same manner as that of Example 1-1, except that the draw ratio was controlled at 12.2 and the molecular chain orientation degree of the extruded pipe was measured to be 70%.

### Radiation Crosslinking

Irradiation was performed in the same manner as that of Example 1-1, except that the radiation dose was controlled at 150 kGy.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 60%.

### Example 1-7

### Masterbatch processing

Manufacturing was performed in the same manner as that of Example 1-1.

### Extrusion into Pipe

Semi-forming was carried out in the same manner as that of Example 1-1, except that the draw ratio was controlled at 15.3 and the molecular chain orientation degree of the extruded pipe was measured to be 90%.

### Radiation Crosslinking

Irradiation was performed in the same manner as that of Example 1-1, except that the radiation dose was controlled at 160 kGy.

Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 80%.

### Example 1-8

### Masterbatch processing

Manufacturing was performed in the same manner as that of Example 1-1.

### Extrusion into Pipe

Semi-forming was carried out in the same manner as that of Example 1-1, except that the draw ratio was controlled at 17.5 and the molecular chain orientation degree of the extruded pipe was measured to be 95%.

### Radiation Crosslinking

Irradiation was performed in the same manner as that of Example 1-1, except that the radiation dose was controlled at 180 kGy.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 85%.

### Example 1-9

### Masterbatch processing

Manufacturing was performed in the same manner as that of Example 1-1, except that the mass ratio of ethylene-methyl acrylate copolymer (EMA, DuPont ELVALOY^{TM} AC 1218) to antioxidant (antioxidant 1010) of 60/0.1 was replaced with a mass ratio of ethylene-methyl acrylate copolymer (EMA, DuPont ELVALOY^{TM} AC 1218), antioxidant (antioxidant 1010) and sensitized crosslinking agent (FRD-301) of 60/0.1/0.1.

### Extrusion into Pipe

Semi-forming was carried out in the same manner as that of Example 1-1.

### Radiation Crosslinking

Irradiation was performed in the same manner as that of Example 1-1, except that the radiation dose was controlled at 100 kGy.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 46%.

### Example 1-10

### Masterbatch processing

Manufacturing was performed in the same manner as that of Example 1-1.

### Extrusion into Pipe

Semi-forming was carried out in the same manner as that of Example 1-1.

### Radiation Crosslinking

Irradiation was performed in the same manner as that of Example 1-1, except that the radiation dose was controlled at 100 kGy.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 42%.

### Example 1-11

### Masterbatch processing

Manufacturing was performed in the same manner as that of Example 1-1.

### Extrusion into Pipe

Semi-forming was carried out in the same manner as that of Example 1-1.

### Radiation Crosslinking

The above semi-finished pipe was irradiated by cobalt-60 (Co) at a controlled radiation dose of 300 kGy, and the irradiation process was implemented in the same manner as that of Example 1-1.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 47%.

### Example 1-12

### Masterbatch processing

Manufacturing was performed in the same manner as that of Example 1-1.

### Extrusion into Pipe

Semi-forming was carried out in the same manner as that of Example 1-1.

### Radiation Crosslinking

Irradiation was performed in the same manner as that of Example 1-1.

### Pipe Expansion

Expansion was implemented in the same manner as that of Example 1-1 by adjusting the nitrogen pressure charged into the expansion apparatus and the mold size, and a heat-shrinkable pipe with an inner diameter of 0.77 mm, an outer diameter of 1.13 mm and a wall thickness of 0.18 mm was obtained.

The heat-shrinkable pipe was tested, and the results were as follows: the complete shrinkage temperature was 110°C, the shrinkage rate was 35%, and the molecular chain orientation degree after complete shrinkage was 45%.

### Example 1-13

### Masterbatch processing

Manufacturing was performed in the same manner as that of Example 1-1.

### Extrusion into Pipe

Semi-forming was carried out in the same manner as that of Example 1-1.

### Radiation Crosslinking

Irradiation was performed in the same manner as that of Example 1-1.

### Pipe Expansion

Expansion was implemented in the same manner as that of Example 1-1 by adjusting the nitrogen pressure charged into the expansion apparatus and the mold size, and a heat-shrinkable pipe with an inner diameter of 2 mm, an outer diameter of 2.2 mm and a wall thickness of 0.1 mm was obtained.

The heat-shrinkable pipe was tested, and the results were as follows: the complete shrinkage temperature was 110°C, the shrinkage rate was 75%, and the molecular chain orientation degree after complete shrinkage was 45%.

### Example 1-14

### Masterbatch processing

Manufacturing was performed in the same manner as that of Example 1-1.

### Extrusion into Pipe

The masterbatch particles obtained above were subjected to pipe forming by means of a single-screw extruder. A full-thread screw was adopted, and extrusion forming was conducted at an extrusion temperature of 130°C-190°C. The extrusion temperatures were specifically set as follows: Zone 1 at 130°C, Zone 2 at 180°C, Zone 3 at 190°C, flange zone at 190°C, head zone at 190°C, and mold zone at 190°C. The draw ratio was controlled at 29.9. The molecular chain orientation degree of the extruded pipe was measured to be 80%. A semi-finished pipe with an inner diameter of 0.4 mm, an outer diameter of 1.06 mm and a wall thickness of 0.33 mm was obtained.

### Radiation Crosslinking

Irradiation was performed in the same manner as that of Example 1-1.

### Pipe Expansion

Expansion was implemented in the same manner as that of Example 1-1 by adjusting the nitrogen pressure charged into the expansion apparatus and the mold size, and a heat-shrinkable pipe with an inner diameter of 1.2 mm, an outer diameter of 1.6 mm and a wall thickness of 0.2 mm was obtained.

The heat-shrinkable pipe was tested, and the results were as follows: the complete shrinkage temperature was 110°C, the shrinkage rate was 50%, and the molecular chain orientation degree after complete shrinkage was 70%.

### Example 1-15

### Masterbatch processing

Manufacturing was performed in the same manner as that of Example 1-1.

### Extrusion into Pipe

The masterbatch particles obtained above were subjected to pipe forming by means of a single-screw extruder. A full-thread screw was adopted, and extrusion forming was conducted at an extrusion temperature of 130°C-190°C. The extrusion temperatures were specifically set as follows: Zone 1 at 130°C, Zone 2 at 180°C, Zone 3 at 190°C, flange zone at 190°C, head zone at 190°C, and mold zone at 190°C. The draw ratio was controlled at 55.6. The molecular chain orientation degree of the extruded pipe was measured to be 80%. A semi-finished pipe with an inner diameter of 3.0 mm, an outer diameter of 4.04 mm and a wall thickness of 0.52 mm was obtained.

### Radiation Crosslinking

Irradiation was performed in the same manner as that of Example 1-1.

### Pipe Expansion

Expansion was implemented in the same manner as that of Example 1-1 by adjusting the nitrogen pressure charged into the expansion apparatus and the mold size, and a heat-shrinkable pipe with an inner diameter of 6.4 mm, an outer diameter of 7.0 mm and a wall thickness of 0.3 mm was obtained.

The heat-shrinkable pipe was tested, and the results were as follows: the complete shrinkage temperature was 110°C, the shrinkage rate was 50%, and the molecular chain orientation degree after complete shrinkage was 70%.

### Comparative Example 1-1

### Masterbatch processing

Low-density polyethylene (LDPE, lyondellbasell Lupolen 2426K) and antioxidant (antioxidant 1010) were added together into a high-speed mixer at a mass ratio of 60/0.1, followed by stirring for 3 to 5 minutes. The material obtained in the above process was fed into a twin-screw extruder with a cylinder diameter of 30 mm, and extrusion was performed at a screw speed of 45 rpm and an extrusion temperature of 130°C-200°C (the temperature range included 10 zones: Zone 1 at 130°C, Zone 2 at 160°C, Zone 3 at 180°C, Zone 4 at 185°C, Zone 5 at 190°C, Zone 6 at 190°C, Zone 7 at 195°C, Zone 8 at 195°C, Zone 9 at 195°C, Zone 10 at 195°C, with the head temperature set at 200°C). Drawing, water cooling and pelletizing were then carried out to finally form masterbatch particles.

### Extrusion into Pipe

The masterbatch particles obtained above were subjected to pipe forming by means of a single-screw extruder. A full-thread screw was adopted, and extrusion forming was conducted at an extrusion temperature of 130°C-190°C. The extrusion temperatures were specifically set as follows: Zone 1 at 130°C, Zone 2 at 180°C, Zone 3 at 190°C, flange zone at 190°C, head zone at 190°C, and mold zone at 190°C. The draw ratio was controlled at 10.5. The molecular chain orientation degree of the extruded pipe was measured to be 50%. A semi-finished pipe with an inner diameter of 0.5 mm, an outer diameter of 0.9 mm and a wall thickness of 0.2 mm was obtained.

### Radiation Crosslinking

The above semi-finished pipe was irradiated by an electron accelerator apparatus at a radiation dose of 200 kGy to complete radiation crosslinking thereof.

### Pipe Expansion

Nitrogen was charged into an expansion apparatus at 130°C-260°C to expand the pipe after radiation crosslinking, followed by cooling and shaping, so as to obtain a heat-shrinkable pipe with an inner diameter of 1.0 mm, an outer diameter of 1.3 mm and a wall thickness of 0.15 mm.

The heat-shrinkable pipe was tested, and the results were as follows: the complete shrinkage temperature was 120°C, the shrinkage rate was 50%, and the molecular chain orientation degree after complete shrinkage was 43%.

### Comparative Example 1-2

### Masterbatch processing

Manufacturing was performed in the same manner as that of Comparative Example 1-1, except that low-density polyethylene (LDPE) was replaced with ethylene-vinyl acetate copolymer (EVA, 7350M).

### Extrusion into Pipe

Semi-forming was carried out in the same manner as that of Comparative Example 1-1, except that the draw ratio was controlled at 10.2.

### Radiation Crosslinking

Irradiation was performed in the same manner as that of Comparative Example 1-1, except that the radiation dose was controlled at 200 kGy.

### Pipe Expansion

Expansion forming was conducted in the same manner as that of Comparative Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 45%.

### Comparative Example 1-3

### Masterbatch processing

Manufacturing was performed in the same manner as that of Comparative Example 1-1, except that low-density polyethylene (LDPE) was replaced with polyolefin elastomer (POE, ENGAGE^{™} 8180).

### Extrusion into Pipe

Semi-forming was carried out in the same manner as that of Comparative Example 1-1, except that the draw ratio was controlled at 10.9.

### Radiation Crosslinking

Irradiation was performed in the same manner as that of Comparative Example 1-1, except that the radiation dose was controlled at 200 kGy.

### Pipe Expansion

Expansion forming was conducted in the same manner as that of Comparative Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 100°C, the shrinkage rate was 50%, and the molecular chain orientation degree after complete shrinkage was 42%.

### Comparative Example 1-4

### Masterbatch processing

Manufacturing was performed in the same manner as that of Example 1-1.

### Extrusion into Pipe

Semi-forming was carried out in the same manner as that of Example 1-1, except that the draw ratio was controlled at 4 and the molecular chain orientation degree of the extruded pipe was measured to be 15%.

### Radiation Crosslinking

Irradiation was performed in the same manner as that of Example 1-1.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 13%.

### Comparative Example 1-5

### Masterbatch processing

Manufacturing was performed in the same manner as that of Example 1-1.

### Extrusion into Pipe

Semi-forming was carried out in the same manner as that of Comparative Example 1-1, except that the draw ratio was controlled at 10.5.

### Radiation Crosslinking

Irradiation was performed in the same manner as that of Example 1-1, except that the radiation dose was controlled at 50 kGy.

### Pipe Expansion

Expansion forming was conducted in the same manner as that of Example 1-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 16%.

### Comparative Example 1-6

A commercially available tearable FEP heat-shrinkable pipe was adopted, which had a shrinkage ratio of 37.5%, an inner diameter of 1.12 mm before shrinkage and an inner diameter of 0.7 mm after shrinkage.

For the heat-shrinkable pipes prepared as described above, the preparation condition parameters of Example 1-1 to Example 1-15 are shown in Table 1-1, and the preparation condition parameters of Comparative Example 1-1 to Comparative Example 1-6 are shown in Table 1-2. The molecular chain orientation degree of pipes extruded in the extrusion process and the molecular chain orientation degree of prepared heat-shrinkable pipes after complete shrinkage were determined according to the above determination method for the orientation degree. The tear linearity was measured according to the above test method for tear linearity. The tear strength was tested according to the above test method for tear strength. The complete shrinkage temperature was determined according to the above determination method for the complete shrinkage temperature. The shrinkage rate was measured according to the above determination method for the shrinkage rate. The determination results of Example 1-1 to Example 1-15 and Comparative Example 1-1 to Comparative Example 1-6 are listed in Table 1-3.

**Table 1-1 Preparation Condition Parameters of Example 1-1 to Example 1-15**

| | substrate | | | | | draw ratio | radiation dose (kGy) |
|---|---|---|---|---|---|---|---|
| | EMA (g) | EEA (g) | EBA (g) | EMMA (g) | sensitized crosslinking agent (g) | | |
| Example 1-1 | 600 | / | / | / | / | 9.7 | 200 |
| Example 1-2 | / | 600 | / | / | / | 9.8 | 200 |
| Example 1-3 | / | / | 600 | / | / | 9.7 | 200 |
| Example 1-4 | / | / | / | 600 | / | 9.9 | 200 |
| Example 1-5 | 600 | / | / | / | / | 8.5 | 180 |
| Example 1-6 | 600 | / | / | / | / | 12.2 | 150 |
| Example 1-7 | 600 | / | / | / | / | 15.3 | 160 |
| Example 1-8 | 600 | / | / | / | / | 17.5 | 180 |
| Example 1-9 | 600 | / | / | / | 1 | 9.7 | 100 |
| Example 1-10 | 600 | / | / | / | / | 9.7 | 100 |
| Example 1-11 | 600 | / | / | / | / | 9.7 | 300 |
| Example 1-12 | 600 | / | / | / | / | 9.7 | 200 |
| Example 1-13 | 600 | / | / | / | / | 9.7 | 200 |
| Example 1-14 | 600 | / | / | / | / | 29.9 | 200 |
| Example 1-15 | 600 | / | / | / | / | 55.6 | 200 |

**Table 1-2 Preparation Condition Parameters of Comparative Examples 1-1 to 1-6**

| | substrate | | | | | draw ratio | radiation dose (kGy) |
|---|---|---|---|---|---|---|---|
| | EMA | LDPE | EVA | POE | fluorine material | | |
| Comparative Example 1-1 | / | 600 | / | / | / | 10.5 | 200 |
| Comparative Example 1-2 | / | / | 600 | / | / | 10.2 | 200 |
| Comparative Example 1-3 | / | / | / | 600 | / | 10.9 | 200 |
| Comparative Example 1-4 | 600 | / | / | / | / | 4 | 200 |
| Comparative Example 1-5 | 600 | / | / | / | / | 10.5 | 50 |
| Comparative Example 1-6 | / | / | / | / | √ | / | / |

**Table 1-3 Test Results of Examples 1-1 to 1-15 and Comparative Examples 1-1 to 1-6**

| | orientation degree in extrusion process (%) | molecular chain orientation degree of heat-shrinkable pipe (%) | tearable or not | full shrinkage temperature (°C) | shrinkage rate (%) | tear linearity | tear strength (N) |
|---|---|---|---|---|---|---|---|
| Example 1-1 | 50 | 45 | Yes | 110 | 50 | 49:51 | 13.2 |
| Example 1-2 | 50 | 44 | Yes | 110 | 50 | 49:51 | 14.0 |
| Example 1-3 | 50 | 46 | Yes | 110 | 50 | 49:51 | 14.0 |
| Example 1-4 | 50 | 45 | Yes | 110 | 50 | 49:51 | 13.5 |
| Example 1-5 | 40 | 35 | Yes | 110 | 50 | 48:52 | 14.4 |
| Example 1-6 | 70 | 60 | Yes | 110 | 50 | 49:51 | 13.1 |
| Example 1-7 | 90 | 80 | Yes | 110 | 50 | 50:50 | 12.5 |
| Example 1-8 | 95 | 85 | Yes | 110 | 50 | 50:50 | 13.0 |
| Example 1-9 | 50 | 46 | Yes | 110 | 50 | 49:51 | 13.0 |
| Example 1-10 | 50 | 42 | Yes | 110 | 50 | 49:51 | 13.8 |
| Example 1-11 | 50 | 47 | Yes | 110 | 50 | 49:51 | 14.2 |
| Example 1-12 | 50 | 45 | Yes | 110 | 35 | 49:51 | 13.5 |
| Example 1-13 | 50 | 45 | Yes | 110 | 75 | 49:51 | 13.3 |
| Example 1-14 | 80 | 70 | Yes | 110 | 50 | 49:51 | 12.8 |
| Example 1-15 | 80 | 70 | Yes | 110 | 50 | 49:51 | 12.8 |
| Comparative Example 1-1 | 50 | 43 | No | 120 | 50 | / | / |
| Comparative Example 1-2 | 50 | 45 | No | 110 | 50 | / | / |
| Comparative Example 1-3 | 50 | 42 | No | 100 | 50 | / | / |
| Comparative Example 1-4 | 15 | 13 | No | 110 | 50 | / | / |
| Comparative Example 1-5 | 50 | 16 | No | 110 | 50 | / | / |
| Comparative Example 1-6 | / | 65 | Yes | 160 | 37.5 | 50:50 | 20 |

It can be seen from Examples 1-1 to 1-4 and Comparative Examples 1-1 to 1-3 that the easy-to-peel heat-shrinkable pipes made of polyolefin and copolymer resins thereof are greatly related to the type of polymer. EMA, EEA, EBA and EMMA can all be used to prepare easy-to-peel heat-shrinkable pipes, which indicates that this type of ethylene-acrylate copolymer is applicable to the preparation of easy-to-peel heat-shrinkable pipes. As can be seen from Example 1-1, Examples 1-5 to 1-8, Examples 1-14 to 1-15 and Comparative Example 1-4, in addition to the type of polymer, the molecular chain orientation degree of the pipe extruded in the extrusion process shall be controlled within 40%-95%. Meanwhile, it can be concluded from Examples 1-9 to 1-11 and Comparative Example 1-5 that the radiation dose shall be controlled so as to obtain a proper crosslinking degree, and finally enable the molecular chain orientation degree of the prepared easy-to-peel heat-shrinkable pipe to reach 30%-85% to achieve tear linearity. It can be seen from Examples 1-1 to 1-15 and Comparative Example 1-6 that compared with FEP heat-shrinkable pipes, the easy-to-peel heat-shrinkable pipes provided herein have a lower shrinkage temperature and a higher shrinkage rate, and are suitable for assisting the shrinkage of high-magnification non-shrinkable polymer pipes.

### Example 2-1

### Masterbatch processing

Ethylene-methyl acrylate copolymer (EMA, DuPont ELVALOY^{TM} AC 1218), low-density polyethylene (LDPE, lyondellbasell Lupolen 2426K) and antioxidant (antioxidant 1010) were added into a high-speed mixer at a mass ratio of 60/10/0.1, followed by stirring for 3 to 5 minutes. The material obtained above was fed into a twin-screw extruder with a diameter of 30 mm, and extrusion was carried out at a screw speed of 45 rpm and a temperature of 130°C-200°C. The temperature was set in 10 zones: Zone 1 at 130°C, Zone 2 at 160°C, Zone 3 at 180°C, Zone 4 at 185°C, Zone 5 at 190°C, Zone 6 at 190°C, Zone 7 at 195°C, Zone 8 at 195°C, Zone 9 at 195°C and Zone 10 at 195°C, with the head temperature set to 200°C. Drawing, water cooling and pelletizing were then performed to obtain masterbatch particles finally.

### Extrusion into Pipe

The masterbatch particles obtained above were formed into pipes by means of a single-screw extruder. A full-thread screw was adopted, and the extrusion temperature was controlled at 130°C-190°C, which was specifically set as follows: Zone 1 at 130°C, Zone 2 at 180°C, Zone 3 at 190°C, flange zone at 190°C, head zone at 190°C, and mold zone at 190°C. The draw ratio was controlled at 9.9 for extrusion molding. The molecular chain orientation degree of the extruded pipe was measured to be 50%. A semi-finished pipe with an inner diameter of 0.5 mm, an outer diameter of 0.9 mm and a wall thickness of 0.2 mm was obtained.

### Radiation Crosslinking

The above semi-finished pipe was irradiated by an electron accelerator apparatus at a radiation dose of 200 kGy to implement radiation crosslinking thereof.

### Pipe Expansion

The pipe after radiation crosslinking was expanded to twice the original diameter by an expansion apparatus at 130°C-260°C, and then cooled and shaped to obtain a heat-shrinkable pipe with an inner diameter of 1.0 mm, an outer diameter of 1.3 mm and a wall thickness of 0.15 mm.

The heat-shrinkable pipe was tested, and the test results were as follows: the complete shrinkage temperature was 110°C, the shrinkage rate was 50%, and the molecular chain orientation degree after complete shrinkage was 44%.

### Example 2-2

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (the mass ratio = 60/10/0.1) was replaced with ethylene-ethyl acrylate copolymer (EEA, ELVALOY^{TM} AC 2116)/low-density polyethylene (LDPE, lyondellbasell Lupolen 2426K)/antioxidant (antioxidant 1010) (the mass ratio = 60/10/0.1).

### Extrusion into Pipe

Semi-forming was performed in the same manner as that of Example 2-1, except that the draw ratio was controlled at 10.1.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the test results were as follows: the complete shrinkage temperature was 110°C, the shrinkage rate was 50%, and the molecular chain orientation degree after complete shrinkage was 43%.

### Example 2-3

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (the mass ratio = 60/10/0.1) was replaced with ethylene-butyl acrylate copolymer (EBA, AC 3717)/low-density polyethylene (LDPE, lyondellbasell Lupolen 2426K)/antioxidant (antioxidant 1010) (the mass ratio = 60/10/0.1).

### Extrusion into Pipe

Semi-forming was performed in the same manner as that of Example 2-1.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the test results were as follows: the complete shrinkage temperature was 110°C, the shrinkage rate was 50%, and the molecular chain orientation degree after complete shrinkage was 45%.

### Example 2-4

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (the mass ratio = 60/10/0.1) was replaced with ethylene-methyl methacrylate copolymer (EMMA, Sumitomo CM8014)/low-density polyethylene (LDPE, lyondellbasell Lupolen 2426K)/antioxidant (antioxidant 1010) (the mass ratio = 60/10/0.1).

### Extrusion into Pipe

Semi-forming was performed in the same manner as that of Example 2-1, except that the draw ratio was controlled at 10.3.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the test results were as follows: the complete shrinkage temperature was 110°C, the shrinkage rate was 50%, and the molecular chain orientation degree after complete shrinkage was 44%.

### Example 2-5

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (the mass ratio = 60/10/0.1) was replaced with ethylene-methyl acrylate copolymer (EMA, DuPont ELVALOY^{TM} AC 1218)/linear low-density polyethylene (LLDPE, SABIC^{®} LLDPE 218W)/antioxidant (antioxidant 1010) (the mass ratio = 60/10/0.1).

### Extrusion into Pipe

Semi-forming was performed in the same manner as that of Example 2-1, except that the draw ratio was controlled at 9.6.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the test results were as follows: the complete shrinkage temperature was 120°C, the shrinkage rate was 50%, and the molecular chain orientation degree after complete shrinkage was 44%.

### Example 2-6

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (the mass ratio = 60/10/0.1) was replaced with ethylene-methyl acrylate copolymer (EMA, DuPont ELVALOY^{TM} AC 1218)/medium-density polyethylene (MDPE, DOW AXELERON^{™} 8864 NT)/antioxidant (antioxidant 1010) (the mass ratio = 60/10/0.1).

### Extrusion into Pipe

Semi-forming was performed in the same manner as that of Example 2-1, except that the draw ratio was controlled at 9.6.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the test results were as follows: the complete shrinkage temperature was 130°C, the shrinkage rate was 50%, and the molecular chain orientation degree after complete shrinkage was 43%.

### Example 2-7

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (the mass ratio = 60/10/0.1) was replaced with ethylene-methyl acrylate copolymer (EMA, DuPont ELVALOY^{TM} AC 1218)/high-density polyethylene (HDPE, lyondellbasell ACP 6541A)/antioxidant (antioxidant 1010) (the mass ratio = 60/10/0.1).

### Extrusion into Pipe

Semi-forming was carried out in the same manner as that of Example 2-1, except that the draw ratio was controlled at 9.5.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 140°C, the shrinkage rate was 50%, and the molecular chain orientation degree after complete shrinkage was 43%.

### Example 2-8

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (the mass ratio = 60/10/0.1) was replaced with ethylene-methyl acrylate copolymer (EMA, DuPont ELVALOY^{™} AC 1218)/polyolefin elastomer (POE, ENGAGE^{™} 8480)/antioxidant (antioxidant 1010) (the mass ratio = 60/10/0.1).

### Extrusion into Pipe

Semi-forming was carried out in the same manner as that of Example 2-1, except that the draw ratio was controlled at 10.6.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 44%.

### Example 2-9

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 60/10/0.1) was replaced with ethylene-methyl acrylate copolymer (EMA, DuPont ELVALOY^{TM} AC 1218)/ethylene-vinyl acetate copolymer (EVA, 7350M)/antioxidant (antioxidant 1010) (mass ratio = 60/10/0.1).

### Extrusion into Pipe

Semi-forming was carried out in the same manner as that of Example 2-1, except that the draw ratio was controlled at 9.6.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 45%.

### Example 2-10

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 60/10/0.1) was replaced with ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 20/10/0.1).

### Extrusion into Pipe

Semi-forming was carried out in the same manner as that of Example 2-1, except that the draw ratio was controlled at 10.5.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 44%.

### Example 2-11

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 60/10/0.1) was replaced with ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 75/10/0.1).

### Extrusion into Pipe

Semi-forming was carried out in the same manner as that of Example 2-1, except that the draw ratio was controlled at 9.8.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 45%.

### Example 2-12

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 60/10/0.1) was replaced with ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 90/10/0.1).

### Extrusion into Pipe

Semi-forming was carried out in the same manner as that of Example 2-1, except that the draw ratio was controlled at 9.7.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 45%.

### Example 2-13

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 60/10/0.1) was replaced with ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 60/40/0.1).

### Extrusion into Pipe

Semi-forming was carried out in the same manner as that of Example 2-1, except that the draw ratio was controlled at 10.6.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 44%.

### Example 2-14

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 60/10/0.1) was replaced with ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 60/60/0.1).

### Extrusion into Pipe

Semi-forming was carried out in the same manner as that of Example 2-1, except that the draw ratio was controlled at 10.7.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 44%.

### Example 2-15

### Masterbatch processing

The manufacturing was carried out in the same manner as that of Example 2-1, except that ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 60/10/0.1) was replaced with ethylene-methyl acrylate copolymer (EMA, DuPont ELVALOY^{TM} AC 1218)/low-density polyethylene (LDPE, lyondellbasell Lupolen 2426K)/antioxidant (antioxidant 1010) (mass ratio = 60/80/0.1).

### Extrusion into Pipe

Semi-forming was carried out in the same manner as that of Example 2-1, except that the draw ratio was controlled at 10.8.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 43%.

### Example 2-16

### Masterbatch processing

The manufacturing was carried out in the same manner as that of Example 2-1.

### Extrusion into Pipe

Forming was carried out in the same manner as that of Example 2-1, except that the draw ratio was controlled at 8.9 and the molecular chain orientation degree of the extruded pipe was measured to be 40%.

### Radiation Crosslinking

Irradiation was performed in the same manner as that of Example 2-1, except that the radiation dose was adjusted to 190 kGy.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 35%.

### Example 2-17

### Masterbatch processing

The manufacturing was carried out in the same manner as that of Example 2-1.

### Extrusion into Pipe

Forming was carried out in the same manner as that of Example 2-1, except that the draw ratio was controlled at 12.6 and the molecular chain orientation degree of the extruded pipe was measured to be 70%.

### Radiation Crosslinking

Irradiation was performed in the same manner as that of Example 2-1, except that the radiation dose was adjusted to 160 kGy.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 64%.

### Example 2-18

### Masterbatch processing

The manufacturing was carried out in the same manner as that of Example 2-1.

### Extrusion into Pipe

Forming was carried out in the same manner as that of Example 2-1, except that the draw ratio was controlled at 15.8 and the molecular chain orientation degree of the extruded pipe was measured to be 90%.

### Radiation Crosslinking

Irradiation was performed in the same manner as that of Example 2-1, except that the radiation dose was adjusted to 170 kGy.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 82%.

### Example 2-19

### Masterbatch processing

The manufacturing was carried out in the same manner as that of Example 2-1.

### Extrusion into Pipe

Forming was carried out in the same manner as that of Example 2-1, except that the draw ratio was controlled at 17.9 and the molecular chain orientation degree of the extruded pipe was measured to be 95%.

### Radiation Crosslinking

Irradiation was performed in the same manner as that of Example 2-1, except that the radiation dose was adjusted to 190 kGy.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 85%.

### Example 2-20

### Masterbatch processing

The manufacturing was carried out in the same manner as that of Example 2-1.

### Extrusion into Pipe

Semi-forming was carried out in the same manner as that of Example 2-1.

### Radiation Crosslinking

Irradiation was performed in the same manner as that of Example 2-1, except that the radiation dose was controlled at 100 kGy.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 40%.

### Example 2-21

### Masterbatch processing

The manufacturing was carried out in the same manner as that of Example 2-1.

### Extrusion into Pipe

Semi-forming was carried out in the same manner as that of Example 2-1.

### Radiation Crosslinking

The above semi-finished pipe was irradiated by cobalt-60 (Co) at a controlled radiation dose of 300 kGy, and irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 47%.

### Example 2-22

### Masterbatch processing

The manufacturing was carried out in the same manner as that of Example 2-1.

### Extrusion into Pipe

Semi-forming was carried out in the same manner as that of Example 2-1.

### Radiation Crosslinking

Irradiation was performed in the same manner as that of Example 2-1.

### Pipe Expansion

The pressure of nitrogen charged into the expansion apparatus and the mold size were changed, expansion was carried out in the same manner as that of Example 2-1, and a heat-shrinkable pipe with an inner diameter of 0.77 mm, an outer diameter of 1.13 mm and a wall thickness of 0.18 mm was obtained.

The heat-shrinkable pipe was tested, and the results were as follows: the complete shrinkage temperature was 110°C, the shrinkage rate was 35%, and the molecular chain orientation degree after complete shrinkage was 44%.

### Example 2-23

### Masterbatch processing

The manufacturing was carried out in the same manner as that of Example 2-1.

### Extrusion into Pipe

Semi-forming was carried out in the same manner as that of Example 2-1.

### Radiation Crosslinking

Irradiation was performed in the same manner as that of Example 2-1.

### Pipe Expansion

The pressure of nitrogen charged into the expansion apparatus and the mold size were changed, expansion was carried out in the same manner as that of Example 2-1, and a heat-shrinkable pipe with an inner diameter of 2 mm, an outer diameter of 2.2 mm and a wall thickness of 0.1 mm was obtained.

The heat-shrinkable pipe was tested, and the results were as follows: the complete shrinkage temperature was 110°C, the shrinkage rate was 75%, and the molecular chain orientation degree after complete shrinkage was 44%.

### Comparative Example 2-1

### Masterbatch processing

Low-density polyethylene (LDPE, lyondellbasell Lupolen 2426K) and antioxidant (antioxidant 1010) were added into a high-speed mixer at a mass ratio of 60/0.1, followed by stirring for 3 to 5 minutes. The material obtained in the above process was fed into a twin-screw extruder with a cylinder diameter of 30 mm, extrusion was performed at a screw speed of 45 rpm and an extrusion temperature of 130°C-200°C. The temperature range included 10 zones: Zone 1 at 130°C, Zone 2 at 160°C, Zone 3 at 180°C, Zone 4 at 185°C, Zone 5 at 190°C, Zone 6 at 190°C, Zone 7 at 195°C, Zone 8 at 195°C, Zone 9 at 195°C, Zone 10 at 195°C, and the head temperature was set at 200°C. Drawing, water cooling and pelletizing were then carried out to finally form masterbatch particles.

### Extrusion into Pipe

The masterbatch particles obtained above were subjected to pipe forming by means of a single-screw extruder. A full-thread screw was adopted, the extrusion temperature was 130°C-190°C, and the extrusion temperatures were respectively as follows: Zone 1 at 130°C, Zone 2 at 180°C, Zone 3 at 190°C, flange zone at 190°C, head zone at 190°C, and mold zone at 190°C. The draw ratio was controlled at 10.5 for extrusion molding. The molecular chain orientation degree of the extruded pipe was measured to be 50%. A pipe with an inner diameter of 0.5 mm, an outer diameter of 0.9 mm and a wall thickness of 0.2 mm was obtained.

### Radiation Crosslinking

The above semi-finished pipe was irradiated by an electron accelerator apparatus at a radiation dose of 200 kGy to implement radiation crosslinking.

### Pipe Expansion

At 130°C-260°C, nitrogen was charged into the expansion apparatus to expand the pipe after radiation crosslinking; then cooling and shaping were performed, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 120°C, the shrinkage rate was 50%, and the molecular chain orientation degree after complete shrinkage was 43%.

### Comparative Example 2-2

### Masterbatch processing

The manufacturing was carried out in the same manner as that of Comparative Example 2-1, except that low-density polyethylene (LDPE, lyondellbasell Lupolen 2426K)/antioxidant (antioxidant 1010) (mass ratio = 60/0.1) was replaced with polyolefin elastomer (POE, ENGAGE^{™} 8480)/antioxidant (antioxidant 1010) (mass ratio = 60/0.1).

### Extrusion into Pipe

Forming was carried out in the same manner as that of Comparative Example 2-1, except that the draw ratio was controlled at 10.9.

### Radiation Crosslinking

Irradiation was performed in the same manner as that of Comparative Example 2-1.

### Pipe Expansion

Expansion forming was conducted in the same manner as that of Comparative Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 100°C, the shrinkage rate was 50%, and the molecular chain orientation degree after complete shrinkage was 45%.

### Comparative Example 2-3

### Masterbatch processing

The manufacturing was carried out in the same manner as that of Comparative Example 2-1, except that low-density polyethylene (LDPE, lyondellbasell Lupolen 2426K)/antioxidant (antioxidant 1010) (mass ratio = 60/0.1) was replaced with ethylene-vinyl acetate copolymer (EVA, 7350M)/antioxidant (antioxidant 1010) (mass ratio = 60/0.1).

### Extrusion into Pipe

Forming was carried out in the same manner as that of Comparative Example 2-1, except that the draw ratio was controlled at 10.2.

### Radiation Crosslinking

Irradiation was performed in the same manner as that of Comparative Example 2-1.

### Pipe Expansion

Expansion forming was conducted in the same manner as that of Comparative Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 45%.

### Comparative Example 2-4

### Masterbatch processing

The manufacturing was carried out in the same manner as that of Example 2-1.

### Extrusion into Pipe

Forming was carried out in the same manner as that of Example 2-1, except that the draw ratio was controlled at 4 and the molecular chain orientation degree of the extruded pipe was measured to be 15%.

### Radiation Crosslinking

Irradiation was performed in the same manner as that of Example 2-1.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 10%.

### Comparative Example 2-5

### Masterbatch processing

The manufacturing was carried out in the same manner as that of Example 2-1.

### Extrusion into Pipe

The manufacturing was carried out in the same manner as that of Example 2-1, except that the draw ratio was controlled at 10.5.

### Radiation Crosslinking

Irradiation was performed in the same manner as that of Example 2-1, except that the radiation dose was controlled at 50 kGy.

### Pipe Expansion

Expansion forming was conducted in the same manner as that of Example 2-1, and a heat-shrinkable pipe with an inner diameter of 1.0 mm, an outer diameter of 1.3 mm and a wall thickness of 0.15 mm was obtained.

The heat-shrinkable pipe was tested, and the results were as follows: the complete shrinkage temperature was 110°C, the shrinkage rate was 50%, and the molecular chain orientation degree after complete shrinkage was 20%.

### Comparative Example 2-6

A commercially available tearable FEP heat-shrinkable pipe was adopted, which had a shrinkage ratio of 37.5%, an inner diameter of 1.12 mm before shrinkage and an inner diameter of 0.7 mm after shrinkage.

For the easy-to-peel heat-shrinkable pipes prepared above, the preparation condition parameters of Example 1-1 and Examples 2-1 to 2-23 are shown in Table 2-1, and the preparation condition parameters of Comparative Examples 2-1 to 2-6 are shown in Table 2-2. The molecular chain orientation degree of the extruded pipes and the molecular chain orientation degree of the prepared heat-shrinkable pipes after complete shrinkage were determined according to the above determination method for orientation degree; the tear linearity was measured according to the above test method for tear linearity; the tear strength was measured according to the above test method for tear strength; the tensile strength was measured according to the above test method for tensile strength; the complete shrinkage temperature was measured according to the above determination method for complete shrinkage temperature; and the shrinkage rate was measured according to the above determination method for shrinkage rate. The determination results of Example 1-1, Examples 2-1 to 2-23 and Comparative Examples 2-1 to 2-6 are listed in Table 2-3.

**Table 2-1 Preparation Condition Parameters of Example 1-1 and Examples 2-1 to 2-23**

| | ethylene-acrylate copolymer | | | | polyethylene (PE) | | | | PO E (g) | EV A (g) | draw ratio | radiation dose (kGy) |
|---|---|---|---|---|---|---|---|---|---|---|---|---|
| | EM A (g) | EE A (g) | EB A (g) | EM MA (g) | LD PE (g) | LL DP E (g) | MD PE (g) | HD PE (g) | | | | |
| Example 1-1 | 600 | / | / | / | / | / | / | / | / | / | 9.7 | 200 |
| Example 2-1 | 600 | / | / | / | 100 | / | / | / | / | / | 9.9 | 200 |
| Example 2-2 | / | 600 | / | / | 100 | / | / | / | / | / | 10.1 | 200 |
| Example 2-3 | / | / | 600 | / | 100 | / | / | / | / | / | 9.9 | 200 |
| Example 2-4 | / | / | / | 600 | 100 | / | / | / | / | / | 10.3 | 200 |
| Example 2-5 | 600 | / | / | / | / | 100 | / | / | / | / | 9.6 | 200 |
| Example 2-6 | 600 | / | / | / | / | / | 100 | / | / | / | 9.6 | 200 |
| Example 2-7 | 600 | / | / | / | / | / | / | 100 | / | / | 9.5 | 200 |
| Example 2-8 | 600 | / | / | / | / | / | / | / | 100 | / | 10.6 | 200 |
| Example 2-9 | 600 | / | / | / | / | / | / | / | / | 100 | 9.6 | 200 |
| Example 2-10 | 200 | / | / | / | 100 | / | / | / | / | / | 10.5 | 200 |
| Example 2-11 | 750 | / | / | / | 100 | / | / | / | / | / | 9.8 | 200 |
| Example 2-12 | 900 | / | / | / | 100 | / | / | / | / | / | 9.7 | 200 |
| Example 2-13 | 600 | / | / | / | 400 | / | / | / | / | / | 10.6 | 200 |
| Example 2-14 | 600 | / | / | / | 600 | / | / | / | / | / | 10.7 | 200 |
| Example 2-15 | 600 | / | / | / | 800 | / | / | / | / | / | 10.8 | 200 |
| Example 2-16 | 600 | / | / | / | 100 | / | / | / | / | / | 8.9 | 190 |
| Example 2-17 | 600 | / | / | / | 100 | / | / | / | / | / | 12.6 | 160 |
| Example 2-18 | 600 | / | / | / | 100 | / | / | / | / | / | 15.8 | 170 |
| Example 2-19 | 600 | / | / | / | 100 | / | / | / | / | / | 17.9 | 190 |
| Example 2-20 | 600 | / | / | / | 100 | / | / | / | / | / | 9.9 | 100 |
| Example 2-21 | 600 | / | / | / | 100 | / | / | / | / | / | 9.9 | 300 |
| Example 2-22 | 600 | / | / | / | 100 | / | / | / | / | / | 9.9 | 200 |
| Example 2-23 | 600 | / | / | / | 100 | / | / | / | / | / | 9.9 | 200 |

**Table 2-2 Preparation Condition Parameters of Comparative Examples 2-1 to 2-6**

| | substrate | | | | | draw ratio | radiation dose (kGy) |
|---|---|---|---|---|---|---|---|
| | EMA(g) | LDPE(g) | POE(g) | EVA(g) | fluorine material | | |
| Comparative Example 2-1 | / | 600 | / | / | / | 10.5 | 200 |
| Comparative Example 2-2 | / | / | 600 | / | / | 10.9 | 200 |
| Comparative Example 2-3 | / | / | / | 600 | / | 10.2 | 200 |
| Comparative Example 2-4 | 600 | 100 | / | / | / | 4 | 200 |
| Comparative Example 2-5 | 600 | 100 | / | / | / | 10.5 | 50 |
| Comparative Example 2-6 | / | / | / | / | √ | / | / |

**Table 2-3 Test Results of Example 1-1, Examples 2-1 to 2-23 and Comparative Examples 2-1 to 2-6**

| | orientation degree in extrusion process (%) | molecular chain orientation degree of heat-shrinkable pipe (%) | tearable or not | complete shrinkage temperature (°C) | shrinkage rate (%) | tear linearity | tear strength (N) | tensile strength (MPa) |
|---|---|---|---|---|---|---|---|---|
| Example 1-1 | 50 | 45 | Y | 110 | 50 | 49:51 | 13.2 | 16.8 |
| Example 2-1 | 50 | 44 | Y | 110 | 50 | 48:52 | 13.5 | 18.0 |
| Example 2-2 | 50 | 43 | Y | 110 | 50 | 48:52 | 14.0 | 18.2 |
| Example 2-3 | 50 | 45 | Y | 110 | 50 | 48:52 | 14.0 | 18.8 |
| Example 2-4 | 50 | 44 | Y | 110 | 50 | 48:52 | 13.8 | 18.0 |
| Example 2-5 | 50 | 44 | Y | 120 | 50 | 48:52 | 13.8 | 20.3 |
| Example 2-6 | 50 | 43 | Y | 130 | 50 | 48:52 | 14.0 | 22.8 |
| Example 2-7 | 50 | 43 | Y | 140 | 50 | 48:52 | 14.2 | 24.7 |
| Example 2-8 | 50 | 44 | Y | 110 | 50 | 48:52 | 13.5 | 21.6 |
| Example 2-9 | 50 | 45 | Y | 110 | 50 | 48:52 | 13.5 | 20.8 |
| Example 2-10 | 50 | 44 | Y | 110 | 50 | 48:52 | 13.5 | 18.0 |
| Example 2-11 | 50 | 45 | Y | 110 | 50 | 48:52 | 13.3 | 17.6 |
| Example 2-12 | 50 | 45 | Y | 110 | 50 | 48:52 | 13.2 | 17.0 |
| Example 2-13 | 50 | 44 | Y | 110 | 50 | 48:52 | 13.7 | 18.3 |
| Example 2-14 | 50 | 44 | Y | 110 | 50 | 48:52 | 13.8 | 18.5 |
| Example 2-15 | 50 | 43 | Y | 110 | 50 | 48:52 | 13.9 | 19.0 |
| Example 2-16 | 40 | 35 | Y | 110 | 50 | 48:52 | 14.2 | 17.8 |
| Example 2-17 | 70 | 64 | Y | 110 | 50 | 49:51 | 13.5 | 18.3 |
| Example 2-18 | 90 | 82 | Y | 110 | 50 | 50:50 | 13.3 | 18.5 |
| Example 2-19 | 95 | 85 | Y | 110 | 50 | 50:50 | 13.2 | 18.8 |
| Example 2-20 | 50 | 40 | Y | 110 | 50 | 48:52 | 14.2 | 17.6 |
| Example 2-21 | 50 | 47 | Y | 110 | 50 | 48:52 | 13.7 | 18.8 |
| Example 2-22 | 50 | 44 | Y | 110 | 35 | 48:52 | 13.5 | 18.0 |
| Example 2-23 | 50 | 44 | Y | 110 | 75 | 48:52 | 13.5 | 18.0 |
| Comparative Example 2-1 | 50 | 43 | N | 120 | 50 | / | / | 19.5 |
| Comparative Example 2-2 | 50 | 45 | N | 100 | 50 | / | / | 24.5 |
| Comparative Example 2-3 | 50 | 45 | N | 110 | 50 | / | / | 18.5 |
| Comparative Example 2-4 | 15 | 10 | N | 110 | 50 | / | / | 17.2 |
| Comparative Example 2-5 | 50 | 20 | N | 110 | 50 | / | / | 17.4 |
| Comparative Example 2-6 | / | 65 | Y | 160 | 37.5 | 50:50 | 20 | 26.8 |

It can be seen from Examples 2-1 to 2-4 and Comparative Examples 2-1 to 2-3 that the performance of easy-to-peel heat-shrinkable pipes made of polyolefin and copolymer resins thereof is highly correlated with the type of polymer. EMA, EEA, EBA and EMMA are all applicable to the preparation of easy-to-peel heat-shrinkable pipes, which indicates that ethylene-acrylate copolymers of this category can all be used to prepare the easy-to-peel heat-shrinkable pipes. As can be seen from Example 2-1, Examples 2-16 to 2-19 and Comparative Example 2-4, besides the polymer type, the orientation degree in the extrusion process shall be controlled within 40%-95%. Meanwhile, it can be concluded from Example 2-1, Examples 2-20 to 2-21 and Comparative Example 2-5 that the radiation dose needs to be regulated to obtain an appropriate crosslinking degree, so that the orientation degree of the finally prepared easy-to-peel heat-shrinkable pipes ranges from 30% to 85%, and the pipes have linear tearability. It can be seen from Example 2-1 and Example 1-1 that the addition of a reinforcing agent can improve the tensile strength of easy-to-peel heat-shrinkable pipes. It can be seen from Examples 2-1 to 2-23 and Comparative Example 2-6 that compared with FEP heat-shrinkable pipes, the easy-to-peel heat-shrinkable pipes provided herein have lower shrinkage temperature and higher shrinkage rate, and are suitable for assisting the shrinkage of high-magnification non-shrinkable polymer pipes.

The present invention provides an easy-to-peel heat-shrinkable pipe made of polyolefin, copolymer resins thereof and a reinforcing agent. The pipe has lower tear strength than FEP easy-to-peel heat-shrinkable pipes, low shrinkage temperature, high shrinkage rate and high tensile strength, and is free of adhesion to internal materials. The pipe can completely replace FEP easy-to-peel heat-shrinkable pipes and provides a new alternative for easy-to-peel heat-shrinkable pipes.

The above are only preferred embodiments of the present invention, and are not intended to limit the patent scope of the present invention. For those skilled in the art, various modifications and variations can be made to the present invention. Any modifications, equivalent replacements and improvements made within the spirit and principle of the present invention shall all fall within the protection scope of the present invention.

## Claims

1. An easy-to-peel heat-shrinkable pipe, having linear tearability in a length direction of the pipe, **characterized in that** preparation materials of the easy-to-peel heat-shrinkable pipe comprise ethylene-acrylate copolymer as a matrix resin; in an extrusion procedure, a molecular chain orientation degree of an extruded pipe is controlled to be 40%-95%; a shrinkage rate of the easy-to-peel heat-shrinkable pipe when heated at 200°C is more than or equal to 35%; and after the easy-to-peel heat-shrinkable pipe shrinks by more than or equal to 35% at 200°C, the molecular chain orientation degree of the easy-to-peel heat-shrinkable pipe is 30%-85%.

2. The easy-to-peel heat-shrinkable pipe according to claim 1, wherein in the extrusion procedure, the molecular chain orientation degree of the extruded pipe is controlled to be 50%-90%; the shrinkage rate of the easy-to-peel heat-shrinkable pipe when heated at 200°C is more than or equal to 35%; and after the easy-to-peel heat-shrinkable pipe shrinks by more than or equal to 35% at 200°C, the molecular chain orientation degree of the easy-to-peel heat-shrinkable pipe is 40%-85%.

3. The easy-to-peel heat-shrinkable pipe according to any one of claims 1 to 2, wherein a radiation procedure is further arranged after the extrusion procedure, and a radiation dose provided by radiation equipment in the radiation procedure is 100 kGy-300 kGy.

4. The easy-to-peel heat-shrinkable pipe according to any one of claims 1 to 3, wherein the ethylene-acrylate copolymer comprises at least one selected from the group consisting of ethylene-methyl acrylate copolymer, ethylene-ethyl acrylate copolymer, ethylene-butyl acrylate copolymer and ethylene-methyl methacrylate copolymer.

5. The easy-to-peel heat-shrinkable pipe according to any one of claims 1 to 4, wherein a melt index of the ethylene-acrylate copolymer is (0.5-10) g/10min and an acrylic acid content is 9 wt%-30 wt%; and/or,
a tear strength of the ethylene-acrylate copolymer is lower than 75 kN/m; and/or,
a tensile strength of the ethylene-acrylate copolymer is 15 MPa-24 MPa.

6. The easy-to-peel heat-shrinkable pipe according to any one of claims 1 to 5, wherein in parts by weight, the preparation materials of the easy-to-peel heat-shrinkable pipe comprise following components:
the ethylene-acrylate copolymer: 20-90 parts; and
reinforcing agent: 10-80 parts.

7. The easy-to-peel heat-shrinkable pipe according to claim 6, wherein the reinforcing agent comprises at least one selected from the group consisting of polyethylene, polyolefin elastomer and ethylene-vinyl acetate copolymer.

8. The easy-to-peel heat-shrinkable pipe according to claim 7, wherein the polyethylene is low-density polyethylene, and the low-density polyethylene has a melt index of (0.3-7) g/10min and a tensile strength of 17 MPa-30 MPa; and/or,
the polyethylene is linear low-density polyethylene, and the linear low-density polyethylene has a melt index of (0.3-10) g/10min and a tensile strength of 20 MPa-35 MPa; and/or,
the polyethylene is medium-density polyethylene, and the medium-density polyethylene has a melt index of (0.3-10) g/10min and a tensile strength of 25 MPa-35 MPa; and/or,
the polyethylene is high-density polyethylene, and the high-density polyethylene has a melt index of (0.3-10) g/10min and a tensile strength of 28 MPa-40 MPa; and/or,
the polyolefin elastomer has a melt index of (0.5-5) g/10min, a tensile strength of 18 MPa-40 MPa and a melting temperature of 70°C-110°C; and/or,
the ethylene-vinyl acetate copolymer has a melt index of (0.5-7) g/10min, a tensile strength of 16 MPa-25 MPa, and a vinyl acetate content thereof is not more than 20%.

9. The easy-to-peel heat-shrinkable pipe according to any one of claims 1 to 8, wherein in parts by weight, the preparation materials of the easy-to-peel heat-shrinkable pipe further comprise at least one auxiliary agent selected from:
antioxidant: 0.05-0.3 parts; and
lubricant: 0.05-0.1 parts,
wherein the antioxidant comprises at least one selected from the group consisting of asymmetric hindered phenolic antioxidants, aromatic amine antioxidants, thioether antioxidants and phosphite antioxidants; and
the lubricant comprises at least one selected from the group consisting of PTFE powder, zinc stearate, magnesium stearate, silicone, calcium stearate and ethylene bis-stearamide.

10. The easy-to-peel heat-shrinkable pipe according to any one of claims 1 to 9, wherein a ratio representing the tear linearity ranges from 50%:50% to 48%:52%; and/or,
an inner diameter of the easy-to-peel heat-shrinkable pipe is 0.3 mm-16 mm; and/or,
a wall thickness of the easy-to-peel heat-shrinkable pipe is 0.1 mm-2 mm.

11. An easy-to-peel heat-shrinkable pipe, having linear tearability in a length direction of the pipe, **characterized in that** preparation materials of the easy-to-peel heat-shrinkable pipe comprise ethylene-acrylate copolymer as a matrix resin; a shrinkage rate of the easy-to-peel heat-shrinkable pipe when heated at 200°C is more than or equal to 35%; and after the easy-to-peel heat-shrinkable pipe shrinks by more than or equal to 35% at 200°C, the molecular chain orientation degree of the easy-to-peel heat-shrinkable pipe is 30%-85%.

12. The easy-to-peel heat-shrinkable pipe according to claim 11, wherein the shrinkage rate of the easy-to-peel heat-shrinkable pipe when heated at 200°C is more than or equal to 35%; and after the easy-to-peel heat-shrinkable pipe shrinks by more than or equal to 35% at 200°C, the molecular chain orientation degree of the easy-to-peel heat-shrinkable pipe is 35%-85%.

13. The easy-to-peel heat-shrinkable pipe according to claim 11, wherein the shrinkage rate of the easy-to-peel heat-shrinkable pipe when heated at 200°C is more than or equal to 35%; and after the easy-to-peel heat-shrinkable pipe shrinks by more than or equal to 35% at 200°C, the molecular chain orientation degree of the easy-to-peel heat-shrinkable pipe is 40%-85%.

14. A preparation method for the easy-to-peel heat-shrinkable pipe according to any one of claims 1 to 13, **characterized by** comprising following steps:
masterbatch processing, wherein raw materials are uniformly mixed, and subjected to extrusion by extrusion equipment, drawing and pelletizing to obtain masterbatch particles, wherein the raw materials comprise ethylene-acrylate copolymer;
extrusion into pipe, wherein the obtained masterbatch particles are extruded into a pipe by an extruder to obtain a semi-finished pipe, wherein the molecular chain orientation degree of the extruded pipe is controlled to be 40%-95%;
radiation procedure, wherein the semi-finished pipe is irradiated by radiation equipment, and a radiation dose is controlled to be 100 kGy-300 kGy to obtain an irradiated pipe; and
expansion and shaping, wherein the irradiated pipe is expanded at 130°C-260°C, and then cooled and shaped to obtain the easy-to-peel heat-shrinkable pipe; wherein after the easy-to-peel heat-shrinkable pipe shrinks by more than or equal to 35% at 200°C, the molecular chain orientation degree thereof is 30%-85%.

15. The preparation method according to claim 14, wherein in the step of masterbatch processing, the raw materials further comprise at least one selected from the group consisting of a reinforcing agent, an antioxidant and a lubricant; and/or,
in the step of masterbatch processing, a mixing duration is 3 min-5 min; and/or,
in the step of masterbatch processing, an extrusion temperature of the extrusion equipment is 130°C-200°C; and/or,
in the step of extrusion into pipe, the molecular chain orientation degree of the extruded pipe is 50%-90%; and/or,
in the step of expansion and shaping, cooling and shaping are performed to obtain the easy-to-peel heat-shrinkable pipe, and after the easy-to-peel heat-shrinkable pipe shrinks by more than or equal to 35% at 200°C, the molecular chain orientation degree thereof is 40%-85%.

16. The preparation method according to claim 14, wherein in the step of extrusion into pipe, an extrusion temperature of the extruder is 130°C-190°C; and/or,
in the step of extrusion into pipe, a draw ratio of the extruded pipe is 7-60; and/or,
in the step of extrusion into pipe, the draw ratio of the extruded pipe is 8.5-30.
